(19) Europäisches Patentamt
European Patent Office
Office européen des brevets

(11) **EP 4 368 446 A1**

(12) **EUROPEAN PATENT APPLICATION**

(43) Date of publication:
**15.05.2024 Bulletin 2024/20**

(21) Application number: **22206002.2**

(22) Date of filing: **08.11.2022**

(51) International Patent Classification (IPC):
**B60L 58/40** (2019.01)  **B60L 58/12** (2019.01)
**B60L 58/16** (2019.01)  **B60L 1/00** (2006.01)
**B60L 15/20** (2006.01)  **B60K 6/32** (2007.10)

(52) Cooperative Patent Classification (CPC):
**B60L 58/40; B60K 6/32; B60L 1/003;**
**B60L 15/2045; B60L 58/12; B60L 58/16;**
B60L 2200/40; B60L 2260/54

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Volvo Construction Equipment AB**
**631 85 Eskilstuna (SE)**

(72) Inventors:
• **Kumaraswamy, Aniroodh**
**560054 Bangalore (IN)**

• **Karthikeyan, Abhishek**
**625016 Madurai (IN)**
• **Ask, Johan**
**635 06 Eskilstuna (SE)**
• **Axling, Anton**
**645 50 Strängnäs (SE)**

(74) Representative: **Ström & Gulliksson AB**
**Box 5275**
**102 46 Stockholm (SE)**

Remarks:
Amended claims in accordance with Rule 137(2)
EPC.

(54) **POWER DEMAND ALLOCATION SYSTEM FOR A FUEL CELL ELECTRIC VEHICLE**

(57)     A power demand allocation system (PDAS) for a fuel cell electric vehicle (FCEV), the FCEV comprising a fuel cell and a battery, the system comprising a predictor configured to receive a signal indicative of a current operating state of the FCEV and determine a future operating state of the FCEV based on the current operating state and a past operating state of the FCEV, and an optimizer configured to determine a power demand allocation for the fuel cell and the battery based on the future operating state, wherein the past, current and future operating states of the FCEV comprise respective temporal evolutions of the power demand for the FCEV, the current operating state comprises a first cyclical temporal evolution, and the past operating state comprises a second cyclical temporal evolution.

FIG. 3

EP 4 368 446 A1

**Description**

**TECHNICAL FIELD**

The disclosure relates generally to power demand allocation for a fuel cell electric vehicle. In particular aspects, the disclosure relates to a system and method for determining a power demand allocation for a fuel cell and a battery of the fuel cell electric vehicle based on cyclical operating states of the vehicle.

**BACKGROUND**

The curbing of carbon emissions has been a major area of concern for the automotive industry over the past few years. A pure battery electric vehicle has been shown to be a potential solution for a zero-tailpipe emission form of propulsion. However, to meet the energy demand in large machines, heavy batteries are required, resulting in much higher system weight. Fuel cell electric vehicle (FCEVs) using a hydrogen fuel cell and a battery as source of energy for propulsion are a potential solution for these large machines.

FCEVs are driven by electric motors, powered by a battery pack and a fuel cell stack. A fuel cell is an electrochemical cell, wherein the chemical energy stored in hydrogen is converted to electricity and either stored in a battery, or used directly. The power to the motor of an FCEV can be supplied by the battery or the fuel cell, or a combination of both, depending on power demand.

Many FCEVs performs repetitive working cycles over long periods. For example, a construction machine such as an excavator may have a cyclical working pattern related to excavating, transporting, and depositing material on a construction site. During these cycles, a determination is made regarding how much power should be supplied from each of the fuel cell and the battery to provide the power needed by the vehicle. This is referred to as a power split or a power demand allocation.

A fuel cell is a slow-reacting device while certain FCEVs such as construction machines are transient in operation and generally perform repetitive work cycles. This requires an efficient energy management system in order to meet the power demand, meet system constraints, reduce hydrogen consumption and limit fuel cell and battery degradation. If the power demand for the vehicle is unknown, and the allocation is calculated real time, this can lead to the battery being entirely depleted during high-power demand cycles, and well as resulting in large and rapid transients in power supply from the fuel cell, which has been shown to lead to accelerated degradation.

It is therefore desired to develop a solution for power demand allocation for FCEVs that addresses or at least mitigates some of these issues.

**SUMMARY**

The present disclosure attempts to address the issues discussed above by providing a system and method that determine a power demand allocation for a fuel cell and a battery of an FCEV based on cyclical operating states of the FCEV. In particular, the system and method predict a future operating state of the FCEV based on comparing current and past operating states of the FCEV that each have cyclical temporal evolutions of the power demand. The predicted future state can then be used to determine an optimal power demand allocation, instead of doing so in real time as the power demand changes. Whilst the following disclosure mentions a power demand and power allocation, it will be appreciated by the skilled person that the same concepts apply in a similar manner to energy, current, voltage, and the like.

According to a first aspect of the disclosure, there is provided a power demand allocation system (PDAS) for a fuel cell electric vehicle (FCEV), the FCEV comprising a fuel cell and a battery, the system comprising a predictor configured to receive a signal indicative of a current operating state of the FCEV and determine a future operating state of the FCEV based on the current operating state and a past operating state of the FCEV, and an optimizer configured to determine a power demand allocation for the fuel cell and the battery based on the future operating state, wherein the past, current and future operating states of the FCEV comprise respective temporal evolutions of the power demand for the FCEV, the current operating state comprises a first cyclical temporal evolution, and the past operating state comprises a second cyclical temporal evolution.

By predicting a future operating state of an FCEV and determining a power demand allocation for a fuel cell and a battery accordingly, it is possible to determine an optimal power split without risking depletion or degradation of the power sources. A power demand allocation that fulfils the power demand of the FCEV over a future time horizon can be determined, reducing the need for real-time determination of the allocation. The power demand allocation can be optimized such that transient loads on the fuel cell are reduced, meaning that degradation is reduced and the lifetime of the fuel cell can be extended. The power demand allocation can be further optimized such that a narrower window for the SoC of the battery is used, ensuring that the battery operates in its most efficient region of operation and enabling battery size, and therefore vehicle weight, to be reduced.

In some examples, the predictor is configured to determine a correlation between the first cyclical temporal evolution and the second cyclical temporal evolution, and determine the future operating state based on the correlation. This may enable the most accurate correspondence between past and future operating states to be determined, ensuring that an accurate prediction of the future operating state is provided.

In some examples, the predictor is configured to determine the correlation using an auto-correlation method. An auto-correlation method is relatively easy to implement and is not numerically intensive, meaning less processing power and memory allocation are needed.

In some examples, the predictor is configured to determine a confidence value for the correlation. This may enable the accuracy of the correlation to be assessed such that a decision can be made on whether the prediction of the future state is sufficiently reliable.

In some examples, the predictor is configured to determine the future operating state based on the past operating state if the confidence value is above a threshold. This may enable the selection of only correlations having a sufficient accuracy such that only predictions of the future state having sufficient reliability are determined.

In some examples, the predictor is configured to determine the future operating state based on a part of the past operating state occurring after the second cyclical temporal evolution. The future operating state can be determined based on a part of the past state immediately following the correlation, or a part of the past state offset from and following the correlation. This enables the future operating state to be predicted regardless of whether it is a continued cyclical evolution or not.

In some examples, the predictor is configured to determine an offset between a time instant in the first cyclical temporal evolution and a corresponding time instant in the second cyclical temporal evolution. This may be advantageous in cases where there is an idle period in an operation period. For example, in the case that an operator takes a long lunch break, the offset may be used to prepare for what happens after the break.

In some examples, the future operating state comprises a third cyclical temporal evolution. This may provide an accurate prediction of the further operating state, as the cyclical behaviour is present in the past, current and future states.

In some examples, the optimizer is configured to determine the power demand allocation for the fuel cell and the battery based on a cost function, wherein the cost function is configured to minimize hydrogen consumption of the fuel cell and minimize the occurrence of transient loads on the fuel cell. The use of a cost function may enable the power demand to be optimized objectively based on certain operational parameters of the fuel cell, such that the risk of fuel cell degradation or malfunction is reduced.

In some examples, the optimizer is configured to determine the power demand allocation for the fuel cell and the battery based on upper and/or lower limits for battery SoC, fuel cell power, and/or hydrogen consumption. This may ensure that the determined power demand allocation is maintained within a safe or preferred operating range for one or more parameters of the fuel cell or the battery, ensuring efficient operation and resource utilization, and reducing the risk of degradation or malfunction. In some examples, the more accurate the correlating is considered to be, the broader the various operating ranges can be. The operating ranges may also be dependent on an operating state, for example, a broader operating range can be used if the battery is fully charged and healthy.

In some examples, the optimizer comprises a model predictive control (MPC) module. An MPC module generates an optimal control strategy over a certain time horizon into the future and provides feedback by re-planning this optimal trajectory at every sampling instant, thus accounting for any errors in system modelling and disturbances. It does not require the entire driving cycle information beforehand. MPC has been also been shown to be suitable for online implementation and effective in handling system constraints. When combined with a predicted future state, the MPC module is made truly predictive.

In some examples, the PDAS further comprises a driving data processor configured to determine the current operating state of the FCEV. In some examples, the driving data processor is configured to determine the current operating state of the FCEV in real time. This may ensure that the most relevant power demand information is correlated to a past state in order to determine the future power demand reliably.

In some examples, the driving data processor is configured to determine that the current operating state comprises a first cyclical temporal evolution, generate the signal indicative of the current operating state, and in response to determining that the current operating state comprises a first cyclical temporal evolution, send the signal indicative of the current operating state to the predictor. In this way, the method is made adaptive, and can determine a power demand allocation in real time until a cyclical demand having sufficient correlation is found.

In some examples, the FCEV is a construction vehicle such as an excavator, wheel loader, or articulated hauler. The disclosure is also applicable to other heavy-duty vehicles, such as trucks and buses. In particular, the disclosure is applicable to other vehicles that have a repetitive, consistent operation cycle, such as rigid dump trucks, backhoe loaders, motor graders, compactors, pavers, stationary rock crushers, terminal tractors, forklift trucks, container handlers, straddle carriers, forestry machines (forwarders, processors, skidders, feller bunchers), shuttle trains, commuting vehicles such as ferries, trams, busses, trains and the like.

According to a second aspect of the disclosure, there is provided a method of power demand allocation for an FCEV, the FCEV comprising a fuel cell and a battery, the method comprising receiving a signal indicative of a current operating state of the FCEV, determining a future operating state of the FCEV based on the current operating state and a past operating state of the FCEV, and determining a power demand allocation for the fuel cell and the battery based on the future operating state, wherein the past, current and future operating states of the FCEV comprise respective temporal evolutions of the power demand for the FCEV, the current operating state comprises a first cyclical temporal evolution, and the past operating state comprises a second cyclical temporal evolution. By predicting a future operating state, it is possible to determine an optimal power split sequence between the fuel cell and the battery over a future time horizon that fulfils the power demand, uses a narrower battery SoC window (offering the potential to reduce battery size and vehicle weight), and reduces transients in fuel cell power.

In some examples, the method further comprises determining a correlation between the first cyclical temporal evolution and the second cyclical temporal evolution, and determining the future operating state based on the correlation. This may enable the most accurate correspondence between past and future operating states to be determined, ensuring that an accurate prediction of the future operating state is provided.

In some examples, the method comprises determining the correlation between the current operating state and the past operating state using an auto-correlation method. An auto-correlation method is relatively easy to implement and is not numerically intensive, meaning less processing power and memory allocation are needed.

In some examples, the method further comprises determining a confidence value for the correlation between the current operating state and the past operating state. This may enable the accuracy of the correlation to be assessed such that a decision can be made on whether the prediction of the future state is sufficiently reliable.

In some examples, the method comprises determining the future operating state based on the past operating state if the correlation between the current operating state and the past operating state is above a correlation threshold. This may enable the selection of only correlations having a sufficient accuracy such that only predictions of the future state having sufficient reliability are determined.

In some examples, the method comprises determining the future operating state based on a part of the past operating state occurring after the second cyclical temporal evolution. The future operating state can be determined based on a part of the past state immediately following the correlation, or a part of the past state offset from and following the correlation. This enables the future operating state can to be predicted regardless of whether it is a continued cyclical evolution or not.

In some examples, the method further comprises determining an offset between a time instant in the first cyclical temporal evolution and a corresponding time instant in the second cyclical temporal evolution. This may be advantageous in cases where there is an idle period in an operation period. For example, in the case that an operator takes a long lunch break, the offset may be used to prepare for what happens after the break.

In some examples, the future operating state comprises a third cyclical temporal evolution. This may provide an accurate prediction of the further operating state, as the cyclical behaviour is present in the past, current and future states.

In some examples, the method comprises determining the power demand allocation for the fuel cell and the battery based on a cost function, wherein the cost function is configured to minimize hydrogen consumption of the fuel cell and minimize the occurrence of transient loads on the fuel cell. The use of a cost function may enable the power demand to be optimized objectively based on certain operational parameters of the fuel cell, such that the risk of fuel cell degradation or malfunction is reduced.

In some examples, the method comprises determining the power demand allocation for the fuel cell and the battery based on upper and/or lower limits for battery state of charge, fuel cell power, and/or hydrogen consumption. This may ensure that the determined power demand allocation is maintained within a safe or preferred operating range for one or more parameters of the fuel cell or the battery, ensuring efficient operation and resource utilization, and reducing the risk of degradation or malfunction. In some examples, the more accurate the correlating is considered to be, the broader the various operating ranges can be. The operating ranges may also be dependent on an operating state, for example, a broader operating range can be used if the battery is fully charged and healthy.

In some examples, the method further comprises determining the current operating state of the FCEV, and generating the signal indicative of the current operating state. In some examples, the method comprises determining the current operating state of the FCEV in real time. This may ensure that the most relevant power demand information is correlated to a past state in order to determine the future power demand reliably.

In some examples, the method further comprises determining the future operating state of the FCEV in response to determining that the current operating state comprises a first cyclical temporal evolution. In this way, the method is made adaptive, and can determine a power demand allocation in real time until a cyclical demand having sufficient correlation is found.

In some examples, the FCEV is a construction vehicle such as an excavator, wheel loader, or articulated hauler. The disclosure is also applicable to other heavy-duty vehicles, such as trucks and buses. In particular, the disclosure is applicable to other vehicles that have a repetitive, consistent operation cycle, such as rigid dump trucks, backhoe loaders, motor graders, compactors, pavers, stationary rock crushers, terminal tractors, forklift trucks, container handlers, straddle carriers, forestry machines (forwarders, processors, skidders, feller bunchers), shuttle trains, commuting vehicles such as ferries, trams, busses, trains and the like.

According to a third aspect of the disclosure, there is provided non-transitory computer-readable storage medium comprising instructions, which when executed by the processor device, cause the processor device to perform the method.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above-discussed technical benefits.

## BRIEF DESCRIPTION OF THE DRAWINGS

With reference to the appended drawings, below follows a more detailed description of aspects of the disclosure cited as examples.

FIG. 1 is an exemplary system diagram of an FCEV according to one example.
FIG. 2 is an exemplary system diagram of a PDAS according to one example.
FIG. 3 is a plot of a temporal evolution of a power demand for an FCEV according to one example.
FIG. 4 is a plot of a temporal evolution of a past power demand for an FCEV according to one example.
FIG. 5 is a flow chart of an exemplary method of power demand allocation for an FCEV according to an example.
FIG. 6 is a flow chart of an exemplary method of power demand allocation for an FCEV according to another example.
FIG. 7 is a schematic diagram of an exemplary computer system for implementing examples disclosed herein, according to one example.

Like reference numerals refer to like elements throughout the description.

## DETAILED DESCRIPTION

Aspects set forth below represent the necessary information to enable those skilled in the art to practice the disclosure.

The total power consumption of an FCEV involves power consumed by systems such as the powertrain, hydraulics, and auxiliary systems. These systems operate such that a total power demand on the vehicle is transient. Present methods of determining a power demand allocation between a fuel cell and the battery of an FCEV work based on a real time determination of the power demand for the vehicle. The methods in which this is achieved can be broadly classified into two categories: rule-based methods and optimal control strategies. Rule based methods such as fuzzy logic are simple but not the optimal solution, as they simulate if-else scenarios and mimic human decision-making. Control methods such as dynamic programming (DP), equivalent charge minimization strategies and optimization-based methods such as model predictive control (MPC) are numerically intensive, but can handle complex system models and constraints. DP is a computationally heavy process and is typically used as an offline benchmarking method.

Because of the dynamic behaviour of the vehicle, it is recommended that the fuel cell and the battery be maintained at sensible levels to avoid them becoming completely depleted. However, determining a power demand allocation in real-time in combination with these constraints can lead to the battery being entirely depleted during high-power demand cycles, and well as resulting in large and rapid transients in power supply from the fuel cell, which leads to accelerated degradation. Furthermore, it is possible that the power demand is not met because the fuel cell cannot ramp up power quickly enough. To address this, it may be advantageous to predict a power demand ahead of time and determine the power demand allocation based on the predicted demand. This may be achieved using neural networks or Markov chains, but these approaches require a significant amount of training data to generate an accurate prediction model, and a significant amount of computational power.

The present disclosure attempts to address the issues discussed above by providing a system and method that predict a future operating state of the FCEV based on comparing current and past operating states of the FCEV that each have cyclical temporal evolutions of the power demand. The predicted future state can then be used to determine an optimal power demand allocation, instead of doing so in real time as the power demand changes. A current operating state may be correlated to a past operating state using an autocorrelation method that compares the current power demand with historical power demands in order to find repeating patterns. This can then be used to predict a future power demand. The predicted future demand can then be used to determine an optimised power demand allocation, for example by taking into account parameters such as hydrogen consumption of the fuel cell, transient responses in the fuel cell and the state of charge (SoC) of the battery. This method requires much lower computational power and memory and is suitable for real-time implementation.

Whilst the following is described with respect to a power demand and power allocation, it will be appreciated by the skilled person that the same concepts apply in a similar manner to energy, current, voltage, and the like, which could be determined using relations known in the art.

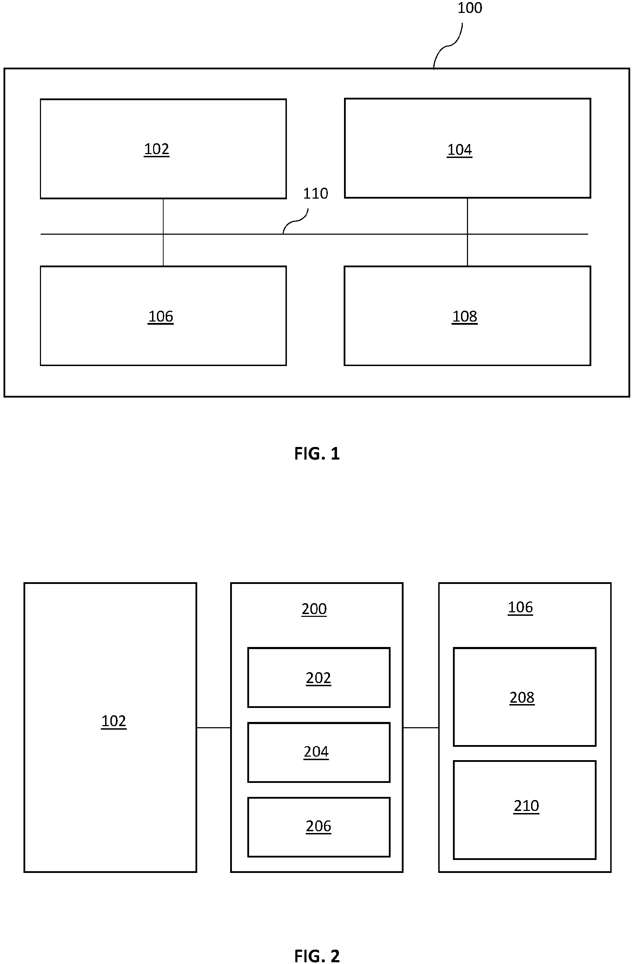

FIG. 1 is an exemplary system diagram of an FCEV 100 according to one example. The FCEV 100 may be any type of FCEV known in the art. In some examples, the FCEV 100 may be a construction vehicle such as an excavator, wheel loader, articulated hauler, rigid dump truck, backhoe loader, motor grader, compactor, paver, stationary rock crusher, terminal tractor, forklift truck, container handler, or straddle carrier. In other examples, the FCEV 100 may be a forestry machine such as a forwarder, processor, skidder, or feller buncher. In some examples, the FCEV 100 may be a transport vehicle such as a shuttle train or a commuting vehicle such as a ferry, tram, bus, train and the like. Although the disclosure may be described with respect to a particular vehicle, the disclosure is not restricted to any particular FCEV.

In certain examples, the FCEV 100 may be an FCEV that performs a cyclical working pattern. Examples of FCEVs having cyclical power demands include a forklift inside a factory that operates on a known route, a hauler that operates between common loading and drop-off points, a wheel loader that drives to a pile, picks up a load, drives to a stationary hauler, and unloads, or a bus that drives repeatedly along the same route.

As can be seen from FIG. 1, the FCEV 100 comprises a control input system 102, drivable systems 104, energy storage systems 106, and a power demand allocation system (PDAS) 108. The systems may be communicatively coupled to each other by a bus 110. The bus 110 may be any of several types of bus structures or architectures known in the art.

The control input system 102 receives or determines a control input for the FCEV 100. For example, an operator may input controls for example through a steering wheel, pedals, levers and the like to control operation of the FCEV 100. In another example, the FCEV 100 may be controlled by an "autopilot" system that determines control signals for the FCEV based on a programmed operation schedule or a user input.

Drivable systems 104 include the power consuming systems of the FCEV 100. This may include the powertrain, hydraulics, brakes, and auxiliary systems such as cabin heating, lights, navigation/infotainment, and the like. In the context of a construction vehicle, the drivable systems 104 may include machine attachments such as components attached to excavator shovels, loaders, and the like.

The energy storage systems 106 comprise components configured to provide power to the drivable systems 104. In the context of an FCEV, the energy storage systems 106 may comprise at least a fuel cell and a battery, as disclosed in more detail in relation to FIG. 2. The energy storage systems 106 may also comprise a generator or the like for actively generating energy for the drivable systems 104.

The PDAS 108 is configured to determine a power demand allocation for the energy storage systems 106. In particular, the PDAS 108 is configured receive or determine a power demand for the FCEV 100, and determine a power split between the energy storage systems 106. The structure and function of the PDAS 108 is disclosed in more detail in relation to FIG. 2.

FIG. 2 is an exemplary system diagram of a PDAS 200, such as the PDAS 108 shown in FIG. 1, according to one example. As can be seen from FIG. 2, the PDAS 200 comprises a driving data processor 202, a predictor 204, and an optimizer 206. The PDAS 200 may be communicatively coupled to the control input system 102 and the energy storage systems 106. As can be seen from FIG. 2, the energy storage systems 106 of the FCEV 100 comprise a fuel cell 208 and a battery 210. It will be appreciated that the energy storage systems 106 may comprise one or more fuel cells 208 and one or more batteries 210.

The driving data processor 202 is configured to determine a current operating state of the FCEV 100. The current operating state may include information such as a power demand for the FCEV 100, an energy level of the fuel cell 208, a SoC of the battery 210, a state of health (SoH) of the battery 210, a temperature of the fuel cell 208 and/or the battery 210, a GPS location of the FCEV 100, an inclination of the FCEV 100, grip levels and available traction, for example based on weather data, and other suitable information.

In particular, the driving data processor 202 is configured to determine a temporal evolution of the current power demand for the FCEV 100. In this respect, the driving data processor 202 may communicate with the control input system 102 to determine the power demand that is being made by an operator or an autopilot system of the FCEV 100. In some examples, the driving data processor 202 is configured to determine the current operating state of the FCEV 100 in real time. This may ensure that the most relevant power demand information is used by the PDAS 200 to determine a power demand allocation reliably. In examples where the operating conditions do not change and are nearly 100% repetitive, such as a forklift operating inside a warehouse on a fixed path, the power demand will be known beforehand and may be directly pre-programmed in the predictor 204 or the optimizer 206.

In some examples, the driving data processor 202 is configured to determine if the power demand of the current operating state has a cyclical temporal evolution. If the power demand of the current operating state does have a cyclical temporal evolution, the driving data processor 202 generates a signal indicative of the current operating state, and sends the signal to the predictor 204. If the power demand of the current operating state does not have a cyclical temporal evolution, the driving data processor 202 generates a signal indicative of the current operating state, and sends the signal directly to the optimizer 206.

The predictor 204 is configured to receive the signal indicative of the current operating state of the FCEV 100 sent from the driving data processor 202 in the case that the power demand of the current operating state has a cyclical temporal evolution. The predictor 204 is then configured to determine a future operating state of the FCEV 100 based on the current operating state and a past operating state of the FCEV 100. In particular, the predictor 204 is configured to determine a temporal evolution of a future power demand for the FCEV 100.

To achieve this, the system works on the assumption that analysis of historical values can be useful in forecasting the future. In particular, the predictor 204 is configured to take the cyclical power demand of the current operating state, and determine if a matching or similar power demand was present in a past operating state of the FCEV 100.

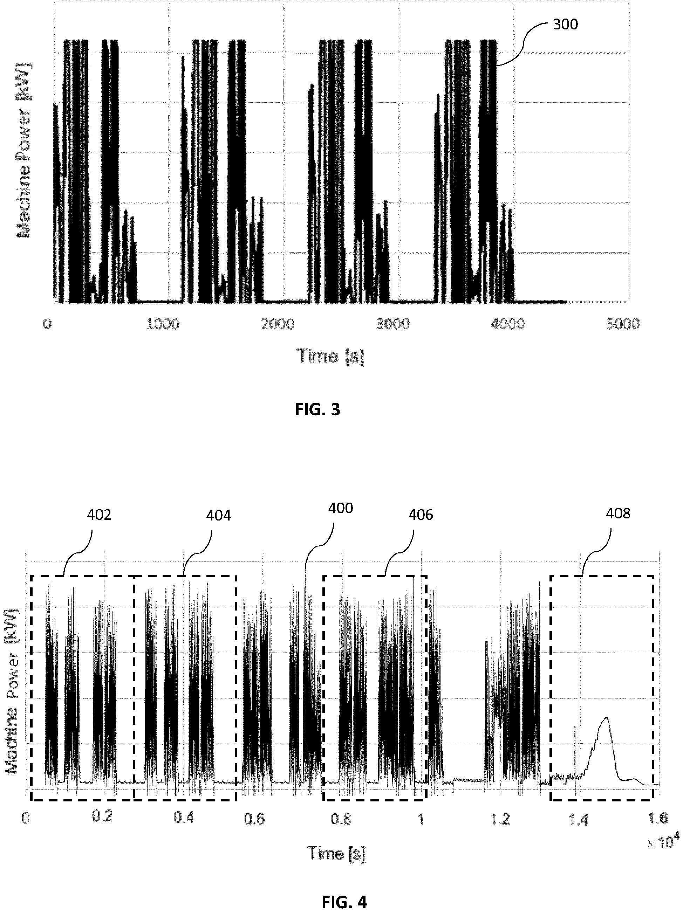

FIG. 3 is a plot of a temporal evolution 300 of the power demand for an FCEV 100 according to an example. As can be seen, the FCEV 100 has four cycles each with a period of approximately 1100s. The temporal evolution shown in FIG. 3 is an example of a cyclical temporal evolution of a past operating state of the FCEV 100 that may be used in the prediction of a future state.

To achieve this, the predictor 204 is configured to determine a correlation between the cyclical temporal evolution of the power demand in the current state, and a cyclical temporal evolution of the power demand in a past state. Taking the example of FIG. 3, a cyclical temporal evolution of the power demand in the current state may be similar to one or more of the four cycles in the temporal evolution 300. The predictor 204 can find this correlation and use it to determine a future temporal evolution, as discussed below.

The temporal evolution of the power demand in a past state may be data stored from historical operation of the FCEV 100, or may be recent data taken "from earlier in a current operation period. The data may be stored in a memory associated with the predictor 204, or may be stored remotely for download to the predictor 204, for example via a wired or wireless internet connection.

The predictor 204 may be configured to determine the correlation using an auto-correlation method. Auto-correlation is a method used to analyse time series data and identify patterns in historical values. In particular, the predictor 204 looks back at the history and trends in the power demand cycle and determines a correlation of the values of the current demand to the values of historical demands.

In some examples, the predictor 204 is configured to determine a confidence value for the correlation, to show the extent to which a signal corresponds with historical values. This may enable the accuracy of the correlation to be assessed such that a decision can be made on whether the prediction of the future state is sufficiently reliable. In one example, the confidence value is an auto-correlation coefficient normalized between -1 and 1. Many relations are known in the art to calculate an auto-correlation coefficient. In one example, the auto-correlation coefficient $r_k$ is determined based on the following relation:

$$r_k = \frac{\sum_{t=k+1}^{T}(y_t - \bar{y})(y_{t-k} - \bar{y})}{\sum_{t=1}^{T}(y_t - \bar{y})^2}$$

where $T$ denotes the length of the time series and the coefficient $r_k$ denotes the correlation between $y_t$ and $y_{t-k}$. In this way, correlation coefficient $r_k$ is calculated for each historical value. This enables the determination of a lag plot, which shows where in time the best correlation can be found. The predictor can then determine an offset, or lag value, between a time instant in the first cyclical temporal evolution and a corresponding time instant in the second cyclical temporal evolution.

To ensure that a sufficiently accurate correlation is used to make the prediction, the predictor 204 is configured to determine if the confidence value for the correlation is above a threshold. When the FCEV 100 has a cyclical power demand, an accurate correlation can be found. If the confidence value is above the threshold, the past state can be used to determine an accurate prediction of the future state. A signal representing the future operating state can then be sent to the optimizer 206 for determination of the power demand allocation. This may enable the selection of only correlations having a sufficient accuracy such that only predictions of the future state having sufficient reliability are determined. If the confidence value is below the threshold, the correlation may be considered insufficient to determine an accurate prediction of the future state, and the power demand may-be determined in real time. This is described in more detail below.

When a sufficiently accurate correlation is found, the predictor 204 can determine a future power demand based on the past power demand. In particular, a good correlation between a current and a past operating state allows the predictor 204 to study the power demand after the correlated past state and use this as a prediction for the future power demand. For example, if a correlation is found between a current power demand evolution and a part of a past power demand evolution, it can be predicted that the power demand will continue in the same manner as it did in the past operating state. In this way, a subsequent part of the past operating state can be used as a predicted power demand for a future operating state. This can be a part of the past state immediately following the correlated part, or a part of the past state offset from and subsequent to the correlated part. This enables the future state to be predicted regardless of whether it is a continued cyclical evolution or not. In the case that the prediction is higher than the real demand, any extra power generated can be used to charge the battery 210 such that no power is wasted. In the opposite case, when the predicted power is lower than the demanded power, the fuel cell power can be maintained at the optimized value and the remaining power demand is provided from the battery 210. This maintains the fuel cell power at an optimum value and also neglects any transients in fuel cell power that may arise due to false prediction, while at the same time meeting demanded power requirements.

FIG. 4 shows examples of how a future power demand can be determined based on a past power demand. In particular, FIG. 4 is a plot of an example temporal evolution 400 of a past power demand for an FCEV 100. As discussed above, the predictor 204 may identify a part 402 of the past temporal evolution 400 that is correlated to a current operating state of the FCEV 100. Based on this correlation, it can be predicted that the FCEV 100 will continue along a same or similar temporal evolution as it has done in the past.

One example of a predicted future state is that the power demand will continue to evolve in a similar manner in the immediate future. Therefore, a part 404 of the temporal evolution 400 immediately following the correlated part 402 can be taken and used for a predicted future state. The part 404 is shown as having a cyclical power demand. This may provide an accurate prediction of the further operating state, as the cyclical behaviour is present in the past, current and future states. Whilst the part 404 is shown as having a cyclical power demand, it will be appreciated that the power demand immediately following the correlated part 402 may also be non-cyclical.

In another example, a part 406 or 408 of the temporal evolution 400 offset from and subsequent to the correlated part 402 can be taken and used for a predicted future state. This may be advantageous in the case that it is desired to correlate the current state with an event at a certain time in the past, for example at the start of a lunch break and use that to predict what happens after the break. As shown in FIG. 4, a power demand offset from and subsequent to the correlated part 402 may be cyclical or non-cyclical. For example, the part 406 is shown as having a cyclical power demand, whilst the part 408 is shown as having a non-cyclical power demand. A non-cyclical power demand may correspond to ramping up the FCEV 100, ramping down the FCEV 100, long idle periods such as a lunch break, refueling of the FCEV 100, an interruption due to weather, and the like.

Returning to FIG. 2, the optimizer 206 is configured to determine a power demand allocation for the fuel cell 208 and the battery 210 based on an input operating state. In particular, the optimizer 206 is configured to determine an optimal way to split the power demand for the FCEV 100 between the fuel cell 208 and the battery 210 to ensure the full power demand of the FCEV 100 is met at all times. To determine the power demand allocation, the optimizer 206 solves an optimization problem at every time instant. This may involve solving a cost function or any other suitable type of optimization problem. The optimization problem may be subject to constraints in the operation of the fuel cell 208 and the battery 210, and be configured to minimize transients in fuel cell power delivery, thus minimizing degradation of the fuel cell 208.

In the case that the predictor 204 sends a signal representing the future operating state, this can be used as an input to the optimizer 206, based on which the power demand allocation can be determined. If no predicted power demand is received from the predictor 204, for example if the driving data processor does not find a cyclical current operating state, or if the predictor 204 does not find a sufficiently accurate correlation, the optimizer 206 determines the power demand allocation in real time.

In some examples, the optimizer 206 is configured to determine the power demand allocation for the fuel cell 208 and the battery 210 based on a cost function. The cost function is configured to minimize hydrogen consumption of the fuel cell 208 and minimize the occurrence of transient loads on the fuel cell 208. The use of such a cost function ensures efficient operation and resource utilization, and reduces the risk of degradation or malfunction of the fuel cell 208. Furthermore, a cost function does not involve any humanlike decision making, and therefore provides an objective optimization. An example cost function is given by:

$$J_E = C_{H_2} + R_{FCS}$$

where $C_{H_2}$ is the cost to minimize hydrogen consumption of the fuel cell 208, and $R_{FCS}$ is the cost to minimize the transient response of the fuel cell 208. These two terms may be given by:

$$C_{H_2} = m_{H_2}(t)$$

$$R_{FCS} = k_r.\left(P_{FCS}(t) - P_{FCS}(t-1)\right)^2$$

where $m_{H_2}(t)$ is the total hydrogen consumption of the fuel cell 208, $P_{FCS}(t)$ is the power from the fuel cell 208, and $k_r$ is a weighting coefficient for the ramping rate of fuel cell power.

The cost function may also include other parameters such as the operating cost of the fuel cell system $C_{op}$, the cost to minimize fuel cell power and meet the demanded power $C_{FCS}$, and system slack costs $C_{s_e}$, $C_{s_u}$. In this case, the cost function may be given by

$$J_E = C_{H_2} + C_{op} + C_{FCS} + R_{FCS} + C_{s_e} + C_{s_u}$$

where the terms may be given by:

$$C_{op} = k_l.m_{H_2}(t)$$

$$C_{FCS} = P_{FCS}(t) + P_B(t) - P_{dem}(t)$$

$$C_{s_e} = k_{s_e}.s_e^2$$

$$C_{s_u} = k_{s_u}.s_u^2$$

where $k_l$ is a weighting coefficient for hydrogen consumption, $P_B(t)$ is the power from the battery 210, $P_{dem}(t)$ is the power demand for the FCEV 100, $s_e$ and $s_u$ are slack variables, and $k_{s_e}$ and $k_{s_u}$ are slack penalties for the slack variables. $C_{H_2}$ and $C_{op}$ may also include a term related to the price of hydrogen.

In some examples, the optimizer 206 is configured to determine the power demand allocation for the fuel cell 208 and the battery 210 based on upper and/or lower limits for certain parameters. These limits may be implemented as constraints for the cost function, or as limits for some other optimization problem.

For example, it may be desired to maintain SoC of the battery 210 between certain upper and lower limits in order to ensure the battery operates in its most efficient region of operation and prevent draining and overcharging of the battery 210. A slack variable may be introduced to the maximum SoC limit to enable the battery to be charged slightly above the maximum and maintain the SoC in that range, for example to give some leeway if the FCEV is charged throughout a long idle period.

It may also be desired to maintain hydrogen consumption of the fuel cell 208 between certain upper and lower limits, in order to ensure efficient operation and resource utilization.

It may also be wished to maintain the power produced by the fuel cell 208 between certain upper and lower limits. This is done to prevent overcharging and complete depletion of the battery fuel cell 208, whilst also avoiding operating the fuel cell 208 at high power regions, which has been found to accelerate degradation, has lower efficiency and increases fuel consumption. At the start of a cycle, the fuel cell power may be initialized to the minimum power value defined in the above constraint. This comes from the assumption that the machine always begins from 'idle'.

Similarly, it may be wished to maintain the power produced by the battery 210 between certain upper and lower limits. The working limits of battery power may be obtained by representing battery power as a function of SoC, such that the discharging power is low at the lower SoC limit and the charging power is low near the upper SoC limit. This is done to prevent overcharging, and complete depletion of the battery 210. The battery 210 may also be initialized with a SoC value from which charging or discharging can begin. This is the value of SoC at which the FCEV 100 is considered to begin operations.

A rate constraint for the fuel cell power may be implemented to minimize transients in the fuel cell 208. In particular, it may be ensured that the difference between consecutive values of fuel cell power is below a certain value. In addition to the minimisation of transients provided by the cost function, this is an effective way to reduce degradation of the fuel cell 208.

An end constraint for the SoC of the battery 210 may also be implemented. The SoC end constraint plays an important role in determining the optimal value for the fuel cell power and hence, power split between the fuel cell 208 and the battery 210. This is because, if the SoC is near a limit, the fuel cell 208 produces power accordingly, i.e. when the SoC is near the lower limit, the fuel cell 208 produces most of the power, and vice versa. The SoC end constraint may also play a major role in ensuring that the system is feasible. In particular, a non-negative slack variable may introduced into the SoC end constraint, allowing the set limit to be broken if the solution tends towards infeasibility. In cases where the fuel cell power is maintained at an optimal value slightly above the minimum value, and the power demand suddenly becomes high, the SoC end constraint may not be satisfied despite the presence of the slack variable. If the starting SoC is close also to its lower limit, then the battery power will not be enough to meet the power demand. To remedy this, the SoC end constraint may be relaxed and the maximum battery power can be provided. Because of this, the remaining power demand is fulfilled.

The range defined by the upper and lower limits can be determined based on the confidence value of the correlation and/or the current operating state. For example, a higher confidence value may indicate a more accurate prediction of the future state, and therefore there may be more leeway in the upper and lower limits. Conversely, if the confidence in the correlation is low or the power demand is determined in real time, the window between the upper and lower limits. Similarly, if the current operating state indicates that the battery 210 is fully charged and healthy, the window between the upper and lower limits can be broader, and vice versa.

As discussed above, if the power demand of the current operating state does have a cyclical temporal evolution, the driving data processor 202 sends a signal indicative of the current operating state to the predictor 204, which determines a predicted future power demand. In this case, the power demand used in the cost function is that predicted by the predictor 204. On the other hand, if the power demand of the current operating state does not have a cyclical temporal evolution, or if the confidence in the correlation is below a certain threshold, the optimizer 206 receives a signal indicative of the real-time power demand that is used in the cost function. In this way, the PDAS 200 is made adaptive, as it can run in real time at the start of an operating cycle while the predictor 204 takes time to find a sufficiently accurate correlation, and subsequently, when there is a correlation greater than a threshold value, use a predicted power demand to generate the optimal allocation between the fuel cell 208 and the battery 210.

The optimizer 206 may be implemented as an MPC module. MPC is an optimization-based method that minimizes a desired cost function, subject to constraints on the states as well as input. This optimization is carried out over a finite horizon and the optimal input and state trajectory is calculated at every time instant. Once the first step is implemented, then state is sampled again and the calculations are repeated starting from the new current state, yielding a new control and new predicted state path. Subsequently, the optimization process is carried out at the next time step, and the process is repeated until the system reaches the desired reference, or tracks a varying reference trajectory. The prediction horizon is continuously shifted forward, and for this reason, MPC may also be referred to as receding horizon control.

The standard formulation of a receding horizon controller is given by:

$$minimize \sum_{k=0}^{T-1} \hat{x}_k^T Q \hat{x}_k + \hat{u}_k^T R \hat{u}_k + \hat{x}_T^T Q_T \hat{x}_T$$

subject to

$$\hat{x}_{k+1} = A\hat{x}_k + B\hat{u}_k \quad k = 0, 1, \dots, T-1$$

$$\hat{x}_k \in X, \hat{u}_k \in U \quad k = 0, 1, \dots, T-1$$

$$\hat{x}_T = X_T$$

$$\hat{x}_0 = \hat{x}_t$$

where the variables $\hat{x}_0 \dots \hat{x}_t$ and $\hat{u}_0 \dots \hat{u}_{T-1}$ represent the optimal values for states and control input over the horizon length $T$. The first control $\hat{u}_t = \hat{u}_0^*$ is fed as the input to the system at that instant. The optimization process is carried over at each time instant in order to account for deviations from the actual model and unforeseen system disturbances. In this way, MPC offers a feedback for the controller to carry out the optimization at every time instant. The term $\hat{x}_T^T Q_T \hat{x}_T$ represents the terminal cost and $X_T$ and $U_T$ represent the terminal sets that the state and control input are expected to belong to, so that a feasible solution can be found for the optimization problem.

For the problem under consideration, MPC offers a suitable platform to model system constraints on the fuel cell 208 and battery 210, for example, the upper and lower limits on the battery SoC, or the minimum and maximum power the fuel cell can produce, discussed above. An MPC module generates an optimal control strategy over a certain time horizon into the future and provides feedback by re-planning this optimal trajectory at every sampling instant, thus accounting for any errors in system modelling and disturbances. MPC does not require the entire driving cycle information beforehand, and has been shown to be effective in handling system constraints. Furthermore, MPC has also been shown to be suitable for real-time implementation. When provided with a predicted power demand from the predictor 204 that is used as an input to the controller, a truly predictive optimization of the power demand allocation between the fuel cell 208 and battery 210 is achieved. In the case where the PDAS 200 does not have a predicted power demand, the optimizer 206 determines the power demand allocation in real time.

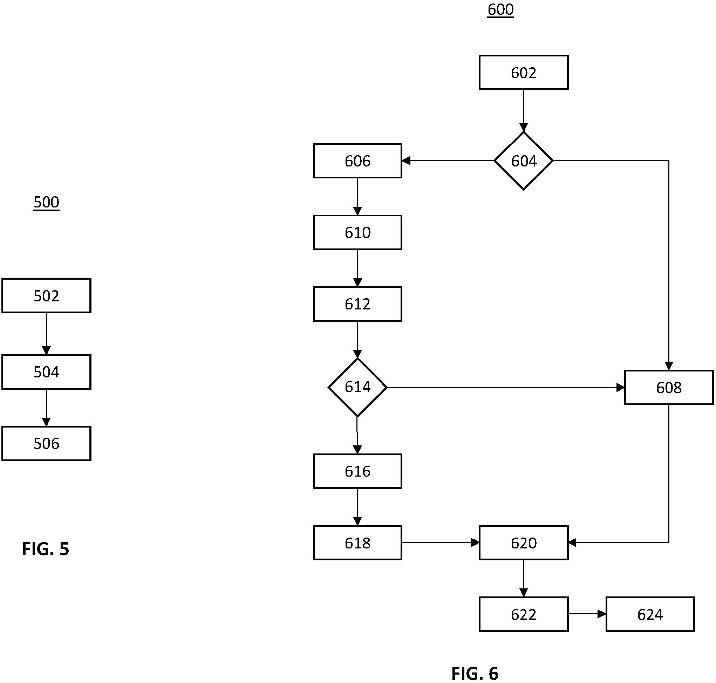

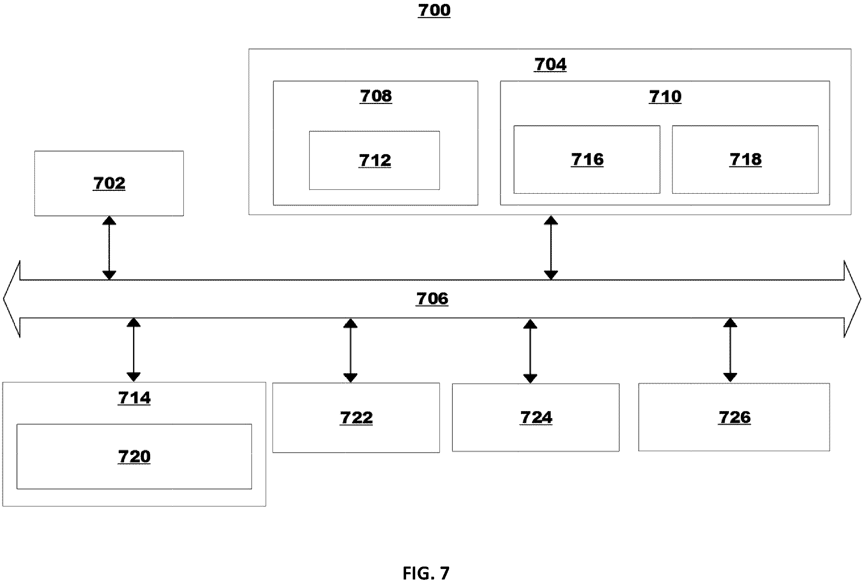

FIG. 5 is a flow chart of an exemplary method 500 of power demand allocation for an FCEV according to an example. The method is a computer-implemented method and may be performed by a computer system as described in relation to FIG. 7. In one example, the method may be performed by the PDAS 200, for example at the predictor 204 and the optimizer 206.

At step 502, a signal indicative of a current operating state of the FCEV 100 is received. As discussed above, the current operating state comprises a current temporal evolution of the power demand for the FCEV 100. The current temporal evolution may be a cyclical temporal evolution.

At step 504, a future operating state of the FCEV 100 is determined based on the current operating state and a past operating state of the FCEV 100. As discussed above, this may be achieved by correlating the current operating state to a past operating state, and predicting that a subsequent part of the past operating state will occur again in the future. As discussed above, the past and future operating states also comprise respective temporal evolutions of the power demand for the FCEV 100. The past temporal evolution may also be a cyclical temporal evolution. The future temporal evolution may be cyclical or non-cyclical, as explained in relation to FIG. 4.

At step 506, a power demand allocation for the fuel cell 208 and the battery 210 is determined based on the future operating state. In particular, an optimal power demand allocation is determined by solving an optimization problem. The optimization problem may comprise a cost function configured to minimize hydrogen consumption of the fuel cell 208 and minimize transients in fuel cell power delivery. The optimization problem may be subject to constraints in the operation of the fuel cell 208 and the battery 210.

The method 500 may be performed iteratively over a number of time instants, such that the future power demand and power demand allocation are determined in a rolling window. This ensures that the FCEV 100 can continue operation while the power demand allocation is determined up to a time horizon.

FIG. 6 is a flow chart of an exemplary method 600 of power demand allocation for an FCEV according to another example. The method is a computer-implemented method and may be performed by a computer system as described in relation to FIG. 7. In one example, the method may be performed by the PDAS 200.

At step 602, a current operating state of the FCEV 100 is determined. This may be performed at the data driving processor 202 of the PDAS. The current operating state may be determined in real time. As discussed above, the current operating state may include information such as a power demand for the FCEV 100, an energy level of the fuel cell 208, a SoC of the battery 210, and a SoH of the battery 210, a temperature of the fuel cell 208 and/or the battery 210, a GPS location of the FCEV 100, an inclination of the FCEV 100, grip levels and available traction, for example based on weather data, and other suitable information.

In particular, the current operating state comprises a temporal evolution of the power demand for the FCEV 100. The data driving processor 202 also generates a signal indicative of the current operating state.

At step 604, it is determined whether the current operating state comprises a power demand having a cyclical temporal evolution. If so, the signal indicative of the current operating state is sent to the predictor 204 at step 606, after which the method 600 proceeds to step 610. If not, the signal indicative of the current operating state is sent to the optimizer 206 at step 608, after which the method 600 proceeds to step 620.

At step 610, the predictor 204 determines a correlation between the cyclical temporal evolution of the power demand of the current state, and a cyclical temporal evolution of the power demand of a past state. As discussed above, the correlation may be determined using an auto-correlation method.

At step 612, a confidence value for the correlation between the current operating state and the past operating state is determined. As discussed above, the confidence value is an auto-correlation coefficient normalized between -1 and 1.

At step 614, it is determined whether the confidence value meets a threshold. If so, the method 600 proceeds to step 616. If not, the method 600 returns to step 608.

At step 616, the predictor 204 determines a future operating state based on the past operating state. In particular, the predictor 204 can determine a future power demand based on the past power demand. As discussed above, the predictor 204 studies the power demand after the correlated part of the past state and uses this as a prediction for the future power demand. This can be a part of the past state immediately following the correlated part, or a part of the past state offset from and following the correlated part. In some examples, an offset between a time instant in the temporal evolution of the current state and a corresponding time instant in the temporal evolution of the past state is determined. In some examples, the future operating state comprises a cyclical temporal evolution of the power demand.

At step 618, the predictor 204 sends a signal indicating the predicted future power demand to the optimizer 206. The signal represents a temporal evolution of the power demand for the FCEV 100.

At step 620, a signal indicating a power demand for the FCEV 100 is received at the optimizer 206. As discussed above, the signal may be a signal indicating a predicted future power demand received from the predictor 204 (step 618), or may be a signal indicating a real time power demand received from the driving data processor 202 (step 608).

At step 622, the optimizer 206 determines a power demand allocation for the fuel cell 208 and the battery 210 based on the future operating state. As discussed above, the power demand allocation may be determined based on a cost function configured to minimize hydrogen consumption of the fuel cell and minimize the occurrence of transient loads on the fuel cell 208. Additionally or alternatively, the power demand allocation may be determined based on upper and/or lower limits for battery SoC, fuel cell power, and/or hydrogen consumption. The optimizer 206 may also take into account a number of other constraints when determining the power demand allocation.

At step 624, the optimizer 206 sends a signal indicating the power demand allocation to the fuel cell 208 and the battery 210.

As discussed above in relation to the method 500, the method 600 may be performed iteratively such that the future power demand and power demand allocation are calculated in a rolling window.

By predicting a future operating state of an FCEV 100 and determining a power demand allocation for a fuel cell 208 and a battery 210 accordingly, it is possible to determine an optimal power split without risking depletion or degradation of the power sources. A power demand allocation that fulfils the power demand of the FCEV 100 over a future time horizon can be determined, reducing the need for real-time determination of the allocation. The power demand allocation can be optimized such that transient loads on the fuel cell 208 are reduced, meaning that degradation is reduced and the lifetime of the fuel cell 208 can be extended. The power demand allocation can be further optimized such that a narrower window for the SoC of the battery 210 is used, ensuring that the battery operates in its most efficient region of operation and enabling battery size, and therefore vehicle weight, to be reduced.

FIG. 7 is a schematic diagram of a computer system 700 for implementing the examples disclosed herein. The computer system 700 is adapted to execute instructions from a computer-readable medium to perform these and/or any of the functions or processing described herein. The computer system 700 may be connected (e.g., networked) to other machines in a LAN, an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include a processor device 702 (may also be referred to as a control unit), a memory 704, and a system bus 706. The computer system 700 may include at least one computing device having the processor device 702. The system bus 706 provides an interface for system components including, but not limited to, the memory 704 and the processor device 702. The processor device 702 may include any number of hardware components for conducting data or signal processing or for executing computer code stored in memory 704. The processor device 702 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processor device 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with a processor device 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program product 720 stored on a transitory or non-transitory computer-usable or computer-readable storage medium (e.g., single medium or multiple media), such as the storage device 714, which includes complex programming instructions (e.g., complex computer-readable program code) to cause the processor device 702 to carry out the steps described herein. Thus, the computer-readable program code can comprise software instructions for implementing the functionality of the examples described herein when executed by the processor device 702. The processor device 702 may serve as a controller or control system for the computer system 700 that is to implement the functionality described herein.

The computer system 700 also may include an input device interface 722 (e.g., input device interface and/or output device interface). The input device interface 722 may be configured to receive input and selections to be communicated to the computer system 700 when executing instructions, such as from a keyboard, mouse, touch-sensitive surface, etc. Such input devices may be connected to the processor device 702 through the input device interface 722 coupled to the system bus 706 but can be connected through other interfaces such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may also include a communications interface 726 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

Also disclosed are examples according to the following clauses:

1. A power demand allocation system "PDAS" (108, 200) for a fuel cell electric vehicle "FCEV" (100), the FCEV comprising a fuel cell (208) and a battery (208), the PDAS comprising:

a predictor (204) configured to receive a signal indicative of a current operating state of the FCEV and determine a future operating state of the FCEV based on the current operating state and a past operating state of the FCEV; and

an optimizer (206) configured to determine a power demand allocation for the fuel cell and the battery based on the future operating state; wherein

the past, current and future operating states of the FCEV comprise respective temporal evolutions of the power demand for the FCEV;

the current operating state comprises a first cyclical temporal evolution; and

the past operating state comprises a second cyclical temporal evolution.

2. The PDAS (108, 200) of clause 1, wherein the predictor (204) is configured to determine a correlation between the first cyclical temporal evolution and the second cyclical temporal evolution, and determine the future operating state based on the correlation.

3. The PDAS (108, 200) of clause 2, wherein the predictor (204) is configured to determine the correlation using an auto-correlation method.

4. The PDAS (108, 200) of clause 2 or 3, wherein the predictor (204) is configured to determine a confidence value for the correlation.

5. The PDAS (108, 200) of clause 4, wherein the predictor (204) is configured to determine the future operating state based on the past operating state if the confidence value is above a threshold.

6. The PDAS (108, 200) of any preceding clause, wherein the predictor (204) is configured to determine the future operating state based on a part of the past operating state occurring after the second cyclical temporal evolution.

7. The PDAS (108, 200) of any preceding clause, wherein the predictor (204) is configured to determine an offset between a time instant in the first cyclical temporal evolution and a corresponding time instant in the second cyclical temporal evolution.

8. The PDAS (108, 200) of any preceding clause, wherein the future operating state comprises a third cyclical temporal evolution.

9. The PDAS (108, 200) of any preceding clause, wherein the optimizer (206) is configured to determine the power demand allocation for the fuel cell (208) and the battery (210) based on a cost function, wherein the cost function is configured to minimize hydrogen consumption of the fuel cell and minimize the occurrence of transient loads on the fuel cell.

10. The PDAS (108, 200) of any preceding clause, wherein the optimizer (206) is configured to determine the power demand allocation for the fuel cell (208) and the battery (210) based on upper and/or lower limits for battery state of charge, fuel cell power, and/or hydrogen consumption.

11. The PDAS (108, 200) of any preceding clause, wherein the optimizer (206) comprises a model predictive control module.

12. The PDAS (108, 200) of any preceding clause, further comprising a driving data processor (202) configured to determine the current operating state of the FCEV (100).

13. The PDAS (108, 200) of clause 12, wherein the driving data processor (202) is configured to determine the current operating state of the FCEV (100) in real time.

14. The PDAS (108, 200) of clause 12 or 13, wherein the driving data processor (202) is configured to:

  determine that the current operating state comprises a first cyclical temporal evolution;
  generate the signal indicative of the current operating state; and
  in response to determining that the current operating state comprises a first cyclical temporal evolution, send the signal indicative of the current operating state to the predictor (204).

15. The PDAS (108, 200) of any preceding clause, wherein the FCEV (100) is a construction vehicle such as an excavator, wheel loader, or articulated hauler.

16. A fuel cell electric vehicle (100) comprising the PDAS (108, 200) of any preceding clause.

17. A method (500, 600) of power demand allocation for a fuel cell electric vehicle "FCEV" (100), the FCEV comprising a fuel cell (208) and a battery (210), the method comprising:

  receiving (502) a signal indicative of a current operating state of the FCEV;
  determining (508, 616) a future operating state of the FCEV based on the current operating state and a past operating state of the FCEV; and

determining (506, 622) a power demand allocation for the fuel cell and the battery based on the future operating state; wherein

the past, current and future operating states of the FCEV comprise respective temporal evolutions of the power demand for the FCEV;

the current operating state comprises a first cyclical temporal evolution; and

the past operating state comprises a second cyclical temporal evolution.

18. The method (500, 600) of clause 17, further comprising determining (610) a correlation between the first cyclical temporal evolution and the second cyclical temporal evolution, and determining (508, 616) the future operating state based on the correlation.

19. The method (500, 600) of clause 18, comprising determining (610) the correlation between the current operating state and the past operating state using an auto-correlation method.

20. The method (500, 600) of clause 18 or 19, further comprising determining (612) a confidence value for the correlation between the current operating state and the past operating state.

21. The method (500, 600) of clause 20, comprising determining (508, 616) the future operating state based on the past operating state if the correlation between the current operating state and the past operating state is above a correlation threshold.

22. The method (500, 600) of any of clauses 17 to 21, comprising determining (508, 616) the future operating state based on a part of the past operating state occurring after the second cyclical temporal evolution.

23. The method (500, 600) of any of clauses 17 to 22, further comprising determining an offset between a time instant in the first cyclical temporal evolution and a corresponding time instant in the second cyclical temporal evolution.

24. The method (500, 600) of any of clauses 17 to 23, wherein the future operating state comprises a third cyclical temporal evolution.

25. The method (500, 600) of any of clauses 17 to 24, comprising determining (622) the power demand allocation for the fuel cell and the battery based on a cost function, wherein the cost function is configured to minimize hydrogen consumption of the fuel cell and minimize the occurrence of transient loads on the fuel cell.

26. The method (500, 600) of any of clauses 17 to 25, comprising determining (622) the power demand allocation for the fuel cell and the battery based on upper and/or lower limits for battery state of charge, fuel cell power, and/or hydrogen consumption.

27. The method (500, 600) of any of clauses 17 to 26, further comprising:

determining (602) the current operating state of the FCEV; and
generating the signal indicative of the current operating state.

28. The method (500, 600) of clause 27, comprising determining (602) the current operating state of the FCEV in real time.

29. The method (500, 600) of clause 27 or 28, further comprising determining (508, 616) the future operating state of the FCEV (100) in response to determining (604) that the current operating state comprises a first cyclical temporal evolution.

30. The method (500, 600) of any of clauses 17 to 29, wherein the FCEV (100) is a construction vehicle such as an excavator, wheel loader, or articulated hauler.

31. A non-transitory computer-readable storage medium comprising instructions that, when executed by the processor device, cause the processor device to perform the method (500, 600) of any of clauses 17 to 30.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

**Claims**

1. A power demand allocation system "PDAS" (108, 200) for a fuel cell electric vehicle "FCEV" (100), the FCEV comprising a fuel cell (208) and a battery (208), the PDAS comprising:

   a predictor (204) configured to receive a signal indicative of a current operating state of the FCEV and determine a future operating state of the FCEV based on the current operating state and a past operating state of the FCEV; and
   an optimizer (206) configured to determine a power demand allocation for the fuel cell and the battery based on the future operating state; wherein
   the past, current and future operating states of the FCEV comprise respective temporal evolutions of the power demand for the FCEV;
   the current operating state comprises a first cyclical temporal evolution; and
   the past operating state comprises a second cyclical temporal evolution.

2. The PDAS (108, 200) of claim 1, wherein the predictor (204) is configured to determine a correlation between the first cyclical temporal evolution and the second cyclical temporal evolution, and determine the future operating state based on the correlation.

3. The PDAS (108, 200) of claim 2, wherein the predictor (204) is configured to determine the correlation using an auto-correlation method.

4. The PDAS (108, 200) of claim 2 or 3, wherein the predictor (204) is configured to determine a confidence value for the correlation.

5. The PDAS (108, 200) of claim 4, wherein the predictor (204) is configured to determine the future operating state based on the past operating state if the confidence value is above a threshold.

**6.** The PDAS (108, 200) of any preceding claim, wherein the predictor (204) is configured to determine the future operating state based on a part of the past operating state occurring after the second cyclical temporal evolution.

**7.** The PDAS (108, 200) of any preceding claim, wherein the future operating state comprises a third cyclical temporal evolution.

**8.** The PDAS (108, 200) of any preceding claim, wherein the optimizer (206) is configured to determine the power demand allocation for the fuel cell (208) and the battery (210) based on a cost function, wherein the cost function is configured to minimize hydrogen consumption of the fuel cell and minimize the occurrence of transient loads on the fuel cell.

**9.** The PDAS (108, 200) of any preceding claim, wherein the optimizer (206) is configured to determine the power demand allocation for the fuel cell (208) and the battery (210) based on upper and/or lower limits for battery state of charge, fuel cell power, and/or hydrogen consumption.

**10.** The PDAS (108, 200) of any preceding claim, wherein the optimizer (206) comprises a model predictive control module.

**11.** The PDAS (108, 200) of any preceding claim, further comprising a driving data processor (202) configured to determine the current operating state of the FCEV (100), preferably in real time.

**12.** The PDAS (108, 200) of claim 12 or 13, wherein the driving data processor (202) is configured to:

determine that the current operating state comprises a first cyclical temporal evolution,
generate the signal indicative of the current operating state; and
in response to determining that the current operating state comprises a first cyclical temporal evolution, send the signal indicative of the current operating state to the predictor (204).

**13.** The PDAS (108, 200) of any preceding claim, wherein the FCEV (100) is a construction vehicle such as an excavator, wheel loader, or articulated hauler.

**14.** A method (500, 600) of power demand allocation for a fuel cell electric vehicle "FCEV" (100), the FCEV comprising a fuel cell (208) and a battery (210), the method comprising:

receiving (502) a signal indicative of a current operating state of the FCEV;
determining (508, 616) a future operating state of the FCEV based on the current operating state and a past operating state of the FCEV; and
determining (506, 622) a power demand allocation for the fuel cell and the battery based on the future operating state; wherein
the past, current and future operating states of the FCEV comprise respective temporal evolutions of the power demand for the FCEV;
the current operating state comprises a first cyclical temporal evolution; and
the past operating state comprises a second cyclical temporal evolution.

**15.** A non-transitory computer-readable storage medium comprising instructions that, when executed by the processor device, cause the processor device to perform the method (500, 600) of claim 14.


**Amended claims in accordance with Rule 137(2) EPC.**

**1.** A power demand allocation system "PDAS" (108, 200) for a fuel cell electric vehicle "FCEV" (100) , the FCEV comprising a fuel cell (208) and a battery (210), the PDAS comprising:

a predictor (204) configured to receive a signal indicative of a current operating state of the FCEV and determine a future operating state of the FCEV based on the current operating state and a past operating state of the FCEV; and
an optimizer (206) configured to determine a power demand allocation for the fuel cell and the battery based on the future operating state; wherein

the past, current and future operating states of the FCEV comprise respective temporal evolutions of the power demand for the FCEV;
the current operating state comprises a first cyclical temporal evolution; and
the past operating state comprises a second cyclical temporal evolution.

**2.** The PDAS (108, 200) of claim 1, wherein the predictor (204) is configured to determine a correlation between the first cyclical temporal evolution and the second cyclical temporal evolution, and determine the future operating state based on the correlation.

**3.** The PDAS (108, 200) of claim 2, wherein the predictor (204) is configured to determine the correlation using an auto-correlation method.

**4.** The PDAS (108, 200) of claim 2 or 3, wherein the predictor (204) is configured to determine a confidence value for the correlation.

**5.** The PDAS (108, 200) of claim 4, wherein the predictor (204) is configured to determine the future operating state based on the past operating state if the confidence value is above a threshold.

**6.** The PDAS (108, 200) of any preceding claim, wherein the predictor (204) is configured to determine the future operating state based on a part of the past operating state occurring after the second cyclical temporal evolution.

**7.** The PDAS (108, 200) of any preceding claim, wherein the future operating state comprises a third cyclical temporal evolution.

**8.** The PDAS (108, 200) of any preceding claim, wherein the optimizer (206) is configured to determine the power demand allocation for the fuel cell (208) and the battery (210) based on a cost function, wherein the cost function is configured to minimize hydrogen consumption of the fuel cell and minimize the occurrence of transient loads on the fuel cell.

**9.** The PDAS (108, 200) of any preceding claim, wherein the optimizer (206) is configured to determine the power demand allocation for the fuel cell (208) and the battery (210) based on upper and/or lower limits for battery state of charge, fuel cell power, and/or hydrogen consumption.

**10.** The PDAS (108, 200) of any preceding claim, wherein the optimizer (206) comprises a model predictive control module.

**11.** The PDAS (108, 200) of any preceding claim, further comprising a driving data processor (202) configured to determine the current operating state of the FCEV (100), preferably in real time.

**12.** The PDAS (108, 200) of claim 11, wherein the driving data processor (202) is configured to:

determine that the current operating state comprises a first cyclical temporal evolution,
generate the signal indicative of the current operating state; and
in response to determining that the current operating state comprises a first cyclical temporal evolution, send the signal indicative of the current operating state to the predictor (204).

**13.** The PDAS (108, 200) of any preceding claim, wherein the FCEV (100) is a construction vehicle such as an excavator, wheel loader, or articulated hauler.

**14.** A method (500, 600) of power demand allocation for a fuel cell electric vehicle "FCEV" (100), the FCEV comprising a fuel cell (208) and a battery (210), the method comprising:

receiving (502) a signal indicative of a current operating state of the FCEV;
determining (508, 616) a future operating state of the FCEV based on the current operating state and a past operating state of the FCEV; and
determining (506, 622) a power demand allocation for the fuel cell and the battery based on the future operating state; wherein
the past, current and future operating states of the FCEV comprise respective temporal evolutions of the power demand for the FCEV;

the current operating state comprises a first cyclical temporal evolution; and

the past operating state comprises a second cyclical temporal evolution.

15. A non-transitory computer-readable storage medium comprising instructions that, when executed by the power demand allocation system "PDAS" of any of claims 1 to 13, cause the power demand allocation system "PDAS" to perform the method (500, 600) of claim 14.

100

102

104

110

106

108

**FIG. 1**

200

102

202

204

206

106

208

210

**FIG. 2**

**FIG. 3**

**FIG. 4**

EP 4 368 446 A1

500

502

504

506

**FIG. 5**

600

602

604

606

610

612

614

608

616

618

620

622

624

**FIG. 6**

FIG. 7

Europäisches
Patentamt

European
Patent Office

Office européen
des brevets

# EUROPEAN SEARCH REPORT

Application Number

EP 22 20 6002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/309416 A1 (BOSE ANIMA B [US] ET AL) 17 December 2009 (2009-12-17) * abstract; claims 1-29; figures 1-31 * * page 2 - page 11 * | 1-15 | INV. B60L58/40 B60L58/12 B60L58/16 B60L1/00 |
| X | US 2014/277931 A1 (CROWE PAUL STEPHEN [US]) 18 September 2014 (2014-09-18) * abstract; claims 1-10; figures 1-5 * * paragraph [0015] - paragraph [0042] * | 1,2,7, 9-11,14, 15 | B60L15/20 B60K6/32 |
| X | US 2022/203908 A1 (BHIMANI MOHAK PRAFULKUMAR [US] ET AL) 30 June 2022 (2022-06-30) * abstract; claims 1-20; figures 1-7 * * paragraph [0011] - paragraph [0044] * | 1,14,15 | |
| A | US 2019/160963 A1 (YOON SUNG GONE [KR] ET AL) 30 May 2019 (2019-05-30) * abstract; claims 1-15; figures 1-8 * * page 2 - page 5 * | 1-15 | |
| | | | TECHNICAL FIELDS SEARCHED (IPC) |
| A | US 6 745 117 B1 (THACHER RUSSELL JAMES [US] ET AL) 1 June 2004 (2004-06-01) * the whole document * | 1-15 | B60L B60K |
| A | US 2021/316713 A1 (VILAR ERIC [US] ET AL) 14 October 2021 (2021-10-14) * the whole document * | 1-15 | |

The present search report has been drawn up for all claims

| Place of search | Date of completion of the search | Examiner |
|---|---|---|
| The Hague | 29 March 2023 | Koutsorodis, Dafni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                               

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 6002

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | | Publication date | Patent family member(s) | | Publication date |
|---|---|---|---|---|---|
| US 2009309416 | A1 | 17-12-2009 | NONE | | |
| US 2014277931 | A1 | 18-09-2014 | NONE | | |
| US 2022203908 | A1 | 30-06-2022 | US | 2022203908 A1 | 30-06-2022 |
| | | | WO | 2022144129 A1 | 07-07-2022 |
| US 2019160963 | A1 | 30-05-2019 | CN | 110015212 A | 16-07-2019 |
| | | | KR | 20190061141 A | 05-06-2019 |
| | | | US | 2019160963 A1 | 30-05-2019 |
| US 6745117 | B1 | 01-06-2004 | DE | 102004023929 A1 | 16-12-2004 |
| | | | GB | 2401691 A | 17-11-2004 |
| | | | US | 6745117 B1 | 01-06-2004 |
| US 2021316713 | A1 | 14-10-2021 | CN | 113511107 A | 19-10-2021 |
| | | | DE | 102021201642 A1 | 14-10-2021 |
| | | | US | 2021316713 A1 | 14-10-2021 |

EPO FORM P0459

For more details about this annex : see Official Journal of the European Patent Office, No. 12/82